# EUROPÄISCHE PATENTSCHRIFT

(11) **EP 3 597 686 B1**
(45) Veröffentlichungstag und Bekanntmachung des Hinweises auf die Patenterteilung: **09.09.2020**
(21) Anmeldenummer: 18184505.8
(22) Anmeldetag: 19.07.2018
(51) Int. Cl.: C08G 18/54, B60C 11/00, C08G 18/76, C08G 18/80

(54) **TAUCHBADZUSAMMENSETZUNGEN ZUR BEHANDLUNG VON VERSTÄRKUNGSEINLAGEN**
SUBMERSIBLE BATH COMPOSITIONS FOR TREATING REINFORCEMENT INSERTS
COMPOSITIONS DE BAIN D'IMMERSION DESTINÉES AU TRAITEMENT DES INSERTS DE RENFORT

(43) Veröffentlichungstag der Anmeldung: 22.01.2020
(73) Patentinhaber: EMS-Patent AG, 7013 Domat/Ems (CH)
(72) Erfinder: HOLZSCHUH, Martin, 7013 Domat/Ems (CH); KAPLAN, Andreas, 7000 Chur (CH)
(74) Vertreter: Pfenning, Meinig & Partner mbB

(56) Entgegenhaltungen:
- EP-A1- 2 423 186

## Beschreibung

Die vorliegende Erfindung betrifft Tauchbadzusammensetzungen zur Behandlung von Verstärkungseinlagen und deren Verwendung zur Herstellung von verstärkten Gummiprodukten. Außerdem betrifft die vorliegende Erfindung Verfahren zur Herstellung einer haftenden Verstärkungseinlage.

Bei der Herstellung von verstärkten Gummiprodukten hat es sich als vorteilhaft erwiesen, wenn zur Verbesserung der Haftfestigkeit, zwischen Verstärkungseinlage und dem Gummi ein Haftvermittler eingesetzt wird. Bedeutung hat ein derartiger Haftvermittler insbesondere im Bereich von Reifencord als Verstärkungseinlage und anderen hochbelasteten Verbundwerkstoffen mit Verstärkungsfasern. Insbesondere für die Anwendung im Reifencordbereich ist es bekannt geworden, Resorcin-Formaldehyd-Latexsysteme (RFL) zur Verbindung von synthetischen Fasern zu Gummiprodukten einzusetzen.

Aus dem Stand der Technik sind bereits Haftvermittler zur Herstellung von haftenden Verstärkungseinlagen bekannt.

Die EP 1038 899 A1 beschreibt einen Haftvermittler für die Behandlung von Verstärkungseinlagen zur Herstellung von verstärkten Gummiprodukten in Form einer wässrigen Dispersion. Der Haftvermittler basiert dabei auf Isocyanaten.

EP 2 450 389 A1 betrifft einen pulverförmigen, in Wasser dispergierbaren Haftvermittler für textile Verstärkungseinlagen zur Herstellung von verstärkten Gummiprodukten. Der Haftvermittler enthält dabei ein zumindest teilweise verkapptes, niedermolekulares Isocyanat, ein Netzmittel, ein Bindemittel sowie gegebenenfalls weitere Additive.

Die aus dem Stand der Technik bekannten Tauchbäder enthalten Epoxide, um Hafteigenschaften zu erreichen. Der Einsatz von Epoxiden in Tauchbädern bringt aber einige Nachteile mit sich. Zum Einen verursachen Epoxide ein Schäumen der Tauchbadzusammensetzungen, es ist also notwendig Entschäumer zuzusetzen. Zum Anderen wird die Lagerfähigkeit der Tauchbadzusammensetzungen durch den Zusatz von Epoxiden verringert. Weiterhin verlangt das Lösen der Epoxide hohe Scherkräfte und beansprucht sehr viel Zeit. Ein unvollständiges Lösen der Epoxide führt zu Fehlstellen in der Beschichtung der Verstärkungseinlage und damit zu Haftproblemen. Ohne den Zusatz von Epoxiden ist es aber unter Verwendung der aus dem Stand der Technik bekannten Tauchbäder nicht möglich verstärkte Gummiprodukte herzustellen, die gute Hafteigenschaften, insbesondere eine gute Peel-Haftung und einen guten Oberflächenbedeckungsgrad nach dem Peel-Haftungstest, aufweisen.

Davon ausgehend war es Aufgabe der vorliegenden Erfindung eine Tauchbadzusammensetzung bereit zu stellen, die es ermöglicht verstärkte Gummiprodukte herzustellen, die sehr gute Hafteigenschaften, insbesondere eine sehr gute Peel-Haftung und einen guten Oberflächenbedeckungsgrad nach dem Peel-Haftungstest, aufweisen ohne, dass die oben - aus der Verwendung von Epoxiden resultierenden - diskutierten Probleme auftreten. Diese Aufgabe wird von der erfindungsgemäßen wässrigen, feststoffhaltigen Tauchbadzusammensetzung zur Behandlung von Verstärkungseinlagen gemäß Anspruch 1 gelöst, welche die folgenden Komponenten enthält oder aus diesen Komponenten besteht:
(A) mindestens eine verkappte Methylendiphenylisocyanat-Mischung (MDI-Mischung),
   wobei die MDI-Mischung MDI-Oligomere der Formel (l), wobei n eine ganze Zahl von 1 bis 8 ist, 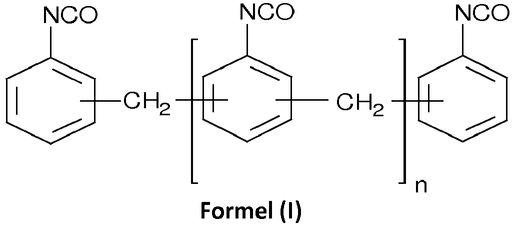 und MDI-Monomere enthält;
(B) mindestens einen Resorcin-Formaldehyd-Latex; und
(C) gegebenenfalls mindestens ein Additiv,
wobei die Tauchbadzusammensetzung im Wesentlichen frei von Epoxiden ist.

Die Patentansprüche 2 bis 9 geben bevorzugte Ausführungsformen der erfindungsgemäßen Tauchbadzusammensetzung an.

Der Patentanspruch 10 betrifft ein Verfahren zur Herstellung einer haftenden Verstärkungseinlage und die Ansprüche 11 bis 13 geben bevorzugte Ausführungsformen dieses Verfahrens an.

Patentanspruch 14 betrifft eine haftende Verstärkungseinlage herstellbar nach dem erfindungsgemäßen Verfahren und Anspruch 15 betrifft die Verwendung dieser haftenden Verstärkungseinlage zur Herstellung von verstärkten Gummiprodukten.

Patentanspruch 16 betrifft die Verwendung der erfindungsgemäßen Tauchbadzusammensetzung zur Beschichtung von Verstärkungseinlagen für Gummiprodukte.

### Begriffsdefinitionen

Der Begriff "verkappt" im Sinne der vorliegenden Erfindung meint eine reversible Blockierung der Isocyanatfunktion. Bevorzugt ist dabei eine vollständige Verkappung, die durch Verwendung des Verkappungsmittels in überstöchiometrischen Mengen erreicht wird.

Die erfindungsgemäßen Tauchbadzusammensetzungen sind wässrig, d.h. als flüssige Phase wird Wasser verwendet. Wasser wird im Folgenden nicht als Komponente der Tauchbadzusammensetzung aufgeführt. Vorzugsweise ist die Tauchbadzusammensetzung im Wesentlichen frei von organischen Lösungsmitteln, also von organischen Flüssigkeiten, die nicht an den Reaktionen teilnehmen. Im Wesentlichen frei heißt, es sind weniger als 5 Gew.-%, bevorzugt weniger als 2 Gew.-% an organischen Lösungsmitteln, bezogen auf das Gesamtgewicht der Tauchbadzusammensetzung, enthalten. Vorzugsweise ist die Tauchbadzusammensetzung vollkommen frei von organischen Lösungsmitteln.

Weiterhin ist die erfindungsgemäße Tauchbadzusammensetzung im Wesentlich frei von Epoxiden, d.h. es sind weniger als 0,7 Gew.-%, bevorzugt weniger als 0,4 Gew.-%, besonders bevorzugt weniger als 0,16 Gew.-% bezogen auf das Gesamtgewicht der Tauchbadzusammensetzung an Epoxiden enthalten. Vorzugsweise sind die Tauchbadzusammensetzungen vollkommen frei von Epoxiden.

Die MDI-Mischung gemäß der vorliegenden Erfindung enthält die Komponenten (i), (ii) und gegebenenfalls (iii) oder besteht bevorzugt ausschließlich aus diesen, es gilt dabei die Maßgabe, dass sich die Komponenten (i), (ii) und (iii) in Summe auf 100 Gew.-% ergänzen. Die festgelegten Bereiche der Mengenangaben für die einzelnen Komponenten (i), (ii) und (iii) sind so zu verstehen, dass innerhalb der vorgegebenen Bereiche eine willkürliche Menge für jede der Einzelkomponenten ausgewählt werden kann, sofern die strikte Maßgabe erfüllt wird, dass die Summe aller Komponenten (i) bis (ii) 100 Gew.-% ergibt.

Die Begriffe "enthaltend" und "umfassend" in den vorliegenden Ansprüchen und in der Beschreibung meinen, dass weitere Komponenten nicht ausgeschlossen sind. Im Rahmen vorliegender Erfindung ist der Begriff "bestehend aus" als bevorzugte Ausführungsform der Begriffe "enthaltend" oder "mfassend" zu verstehen. Wenn definiert wird, dass ein Gruppe mindestens eine bestimmte Anzahl von Komponenten "enthält" oder diese "umfasst", ist dies auch so zu verstehen, dass eine Gruppe offenbart wird, die vorzugsweise aus diesen Komponenten "besteht".

### Tauchbadzusammensetzung

Im Folgenden werden bevorzugte Ausführungsformen der erfindungsgemä-ßen Tauchbadzusammensetzung angegeben.

Gemäß einer bevorzugten Ausführungsform der vorliegenden Erfindung beträgt der Feststoffanteil der Tauchbadzusammensetzung 2 bis 40 Gew.-%, bevorzugt 3 bis 30 Gew.-% und besonders bevorzugt 5 bis 27 Gew.-% bezogen auf das Gesamtgewicht der Tauchbadzusammensetzung.

Eine andere bevorzugte Ausführungsform sieht vor, dass die wässrige, feststoffhaltige Tauchbadzusammensetzung die folgende Zusammensetzung aufweist, wobei die Gew.-teile jeweils auf das Gesamtgewicht der Tauchbadzusammensetzung bezogen sind:
(A) 0,1 bis 20 Gew.-teile, bevorzugt 0,2 bis 10 Gew.-teile und besonders bevorzugt 1 bis 8 Gew.-teile,
(B) 5 bis 200 Gew.-teile, bevorzugt 15 bis 175 Gew.-teile und besonders bevorzugt 25 bis 150 Gew.-teile, und
(C) 0 bis 20 Gew.-Teile, bevorzugt 0,1 bis 10 Gew.-teile und besonders bevorzugt 0,1 bis 3 Gew.-teile.

Nach einer anderen bevorzugten Ausführungsform der vorliegenden Erfindung enthält die verkappte MDI-Mischung (A) MDI-Derivate, die bevorzugt ausgewählt sind aus der Gruppe bestehend aus MDI-Uretdion, Addukten von MDI und/oder MDI-Oligomeren mit anderen Verbindungen, vorzugsweise mit Polyethylenglykol und Mischungen hiervon.

Eine weitere bevorzugte Ausführungsform vorliegender Erfindung sieht vor, dass das MDI ausgewählt ist aus der Gruppe bestehend aus 4,4'-MDI, 2,4'-MDI, 2,2'-MDI und Mischungen hiervon, wobei der Anteil von 2,4'-MDI und 2,2'-MDI kleiner als 10 Gew.-%, bevorzugt kleiner als 8 Gew.-% ist und besonders bevorzugt ist der Anteil von 2,4'-MDI und 2,2'-MDI von 0,1 bis 6 Gew.-%, bezogen auf die MDI-Mischung, besonders bevorzugt enthält die Mischung ein oder mehrere MDI-Oligomere, wobei n in Formel (I) eine ganze Zahl von 1 bis 8 und vorzugsweise von 1 bis 6 ist.

Nach einer anderen bevorzugten erfindungsgemäßen Ausführungsform weist die MDI-Mischung folgende Zusammensetzung auf:
(i) 25 bis 60 Gew.-%, vorzugsweise 25 bis 49,9 Gew.-% MDI-Monomere;
(ii) 40 bis 75 Gew.-%, vorzugsweise 50 bis 74,9 Gew.-% MDI-Oligomere; und
(iii) 0 bis 9 Gew.-%, vorzugsweise 0,1 bis 6 Gew.-% MDI-Derivate;
wobei sich die Anteile der Komponenten (i) bis (iii) zu 100 Gew.-% addieren.

MDI-Mischungen aus MDI-Oligomeren der Formel (l), MDI-Monomeren und gegebenenfalls MDI-Derivaten sind unter der Bezeichnung "polymeres MDI" (PMDI) kommerziell erhältlich, z.B. als Voronate (DowDuPont), Suprosec (Huntsman), Elastoflex (BASF), Lupronat (BASF) oder Autofroth (BASF).

Gemäß einer weiteren bevorzugten Ausführungsform der vorliegenden Erfindung ist bei dem mindestens einen Resorcin-Formaldehyd-Latex (B) der Latex ausgewählt aus der Gruppe bestehend aus Styrol-Butadien-Vinylpyridin Copolymer, Styrol-Butadien-Vinylpyridin Copolymer modifiziert mit Carbonsäure, Styrol-Butadien-Copolymer, Styrol-Butadien Copolymer modifiziert mit Carbonsäure, Nitril-Butadien-Copolymer, Naturlatex, Chloroprenlatex und Mischungen hiervon.

Eine weitere bevorzugte Ausführungsform vorliegender Erfindung sieht vor, dass das mindestens eine Additiv (C) ausgewählt ist aus der Gruppe bestehend aus Tensiden, Entschäumern, Füllstoffen, Farbstoffen, Konservierungsmitteln, Verdickungsmitteln, Säuren Laugen, mehrwertigen Alkoholen und Mischungen hiervon.

Nach einer weiteren bevorzugten Ausführungsform der vorliegenden Erfindung ist die MDI-Mischung (A) mit einer Verbindung verkappt, die ausgewählt ist aus der Gruppe bestehend aus Monophenolen, insbesondere Phenol, Kresol, Trimethylphenolen und tert.-Butylphenolen, Lactamen, insbesondere ε-Caprolactam, δ-Valerolactam und Laurinlactam, Oximen, insbesondere Methyl-Ethyl-Ketoxim, Methyl-Amyl-Ketoxim und Cyclohexanonoxim, Enol-bildenden Verbindungen, insbesondere Acetoessigester, Acetylaceton sowie Mischungen hiervon. Bevorzugt ist das Verkappungsmittel ausgewählt aus der Gruppe bestehend aus Monophenolen, insbesondere Phenol, Kresol, Trimethylphenolen und tert.-Butylphenolen, Lactamen, insbesondere ε-Caprolactam, δ-Valerolactam und Laurinlactam und Mischungen hiervon und besonders bevorzugt ausgewählt ist das Verkappungsmittel aus der Gruppe bestehend aus Phenol, ε-Caprolactam und Mischungen hiervon. Am bevorzugtesten ist die MDI-Mischung (A) mit ε-Caprolactam verkappt.

Eine weitere bevorzugte Ausführungsform der vorliegenden Erfindung sieht vor, dass der mittlere Partikeldurchmesser *d*₅₀ der verkappten MDI-Mischung maximal 2 µm; bevorzugt 0,6 bis 1,5 µm beträgt.

Nach einer anderen bevorzugten Ausführungsform vorliegender Erfindung beträgt der Partikeldurchmesser *d*₁₀₀ der verkappten MDI-Mischung maximal 6 µm; bevorzugt 0,6 bis 5 µm.

Gemäß einer weiteren bevorzugten Ausführungsform der vorliegenden Erfindung weist die verkappte MDI-Mischung eine zahlenmittlere Molmasse Mₙ im Bereich von 550 bis 1200 g/mol und bevorzugt von 700 bis 1100 g/mol auf.

### Verfahren zur Herstellung einer haftenden Verstärkungseinlage

Die vorliegende Erfindung betrifft außerdem ein Verfahren zur Herstellung einer haftenden Verstärkungseinlage, welches mindestens die folgenden Schritte umfasst:
a) Bereitstellen zumindest einer Verstärkungseinlage;
b) Eintauchen der bereitgestellten Verstärkungseinlage in mindestens eine erfindungsgemäße Tauchbadzusammensetzung wie oben definiert;
c) Trocknen der Verstärkungseinlage aus Schritt b) bei 100 bis 240 °C;
d) Einbrennen der Beschichtung der Verstärkungseinlage aus Schritt c) bei 200 bis 250 °C.

Im Folgenden werden bevorzugte Ausführungsformen des erfindungsgemä-ßen Verfahrens zur Herstellung einer haftenden Verstärkungseinlage angegeben.

Gemäß einer bevorzugten Ausführungsform der vorliegenden Erfindung erfolgt Schritt c) bei Temperaturen von 110 bis 210 °C und bevorzugt von 140 bis 180 °C.

Gemäß einer weiteren Ausführungsform der vorliegenden Erfindung erfolgt Schritt d) bei Temperaturen von 220 bis 240 °C.

Eine weitere bevorzugte Ausführungsform der vorliegenden Erfindung sieht vor, dass die Verstärkungseinlage ausgewählt ist aus einer Verbindung aus der Gruppe bestehend aus Polyamid 6, Polyamid 66, Polyethylenterephthalat, Polyethylennaphthalat, Rayon, Aramid, Baumwolle, Basaltfasern, Sisal, Hanf, Flachs, Kokosfasern und Mischungen hiervon.

Gemäß einer anderen bevorzugten Ausführungsform vorliegender Erfindung wird die Verstärkungseinlage vor Schritt b) in eine wässrige, feststoffhaltige Tauchbadzusammensetzung eingetaucht, die mindestens eine verkappte MDI-Mischung enthält und die bevorzugt keine anderen Komponenten enthält, wobei die MDI-Mischung MDI-Oligomere der Formel (l), wobei n eine ganze Zahl von 1 bis 8 ist, 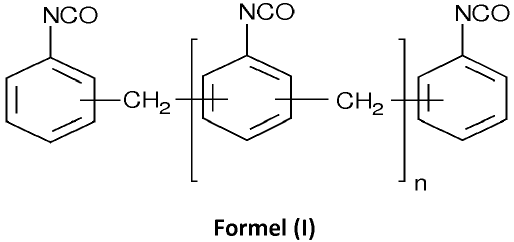 und MDI-Monomere enthält. Nach dem Eintauchschritt ist es bevorzugt, dass das Trocknen und Einbrennen der Schicht unter den oben angegebenen Bedingungen erfolgt bevor Schritt b) des erfindungsgemäßen Verfahrens durchgeführt wird. Bevorzugt erfolgt das Trocknen bei Temperaturen von 110 bis 210 °C und besonders bevorzugt von 140 bis 180 °C. Dabei ist es weiterhin bevorzugt, dass das Trocknen über einen Zeitraum von 30 bis 120 Minuten durchgeführt wird. Weiterhin wird das Einbrennen bei Temperaturen von 220 bis 240 °C durchgeführt. Dabei ist es weiterhin bevorzugt, dass das Einbrennen über einen Zeitraum von 20 bis 120 Minuten durchgeführt wird.

Zur Herstellung eines Tauchbades wird in einem Gefäß, bevorzugt gerührten Gefäß bei Raumtemperatur zunächst deionisiertes Wasser vorgelegt und danach nacheinander die Komponenten (A), (B) und gegebenenfalls (C) eingerührt.

Der Reifencord wird in einer herkömmlichen Beschichtungsanlage beschichtet, wobei der überschüssige Anteil des Tauchbads mit Hilfe einer mechanischen Vorrichtung und/oder einer Vakuumabsaugung bei 1 bis 5 mbar entfernt und die Beschichtung in einem Ofen für 20 bis 120 s bei 100 bis 240 °C zuerst getrocknet und anschliessend in einem weiteren Ofen für 20 bis 120 s bei 200 bis 250 °C eingebrannt wird.

### Verfahren zur Herstellung eines verstärkten Gummiprodukts

Die vorliegende Erfindung betrifft außerdem ein Verfahren zur Herstellung eines verstärkten Gummiproduktes, welches die folgenden Schritte umfasst:
(i) Bereitstellen von mindestens einer Lage einer haftenden Verstärkungseinlage hergestellt über das Verfahren gemäß einem der Ansprüche 10 bis 12;
(ii) Einbetten von mindestens einer Lage aus einer haftenden Verstärkungseinlage aus Schritt (i) in eine Gummimatrix in einer Pressform;
(iii) Pressen der Lagen aus Schritt (ii);
(iv) Vulkanisieren des verstärkten Gummiprodukts aus Schritt (iii) bei 140 bis 210 °C und 5 bis 110 bar für 5 bis 45 Minuten;
(v) Entnehmen des verstärkten Gummiprodukts aus Schritt (iv) aus der Pressform.

Gemäß einer bevorzugten Ausführungsform der vorliegenden Erfindung handelt es sich bei den verstärkten Gummiprodukten um Reifen, sowohl für PKW, Motorräder als auch für Nutzfahrzeuge und Flugzeuge und um technische Gummierzeugnisse, insbesondere um Förderbänder, Luftfedern, Schläuche und Treibriemen, z.B. Keilriemen, Keilrippriemen, Rundriemen, Flachriemen oder Zahnriemen.

### Haftende Verstärkungseinlage

Weiterhin betrifft die vorliegende Erfindung eine haftende Verstärkungseinlage, die nach dem erfindungsgemäßen Verfahren herstellbar ist. Vorzugsweise handelt es sich bei der haftenden Verstärkungseinlage um einen Reifencord.

### Verwendungen

Außerdem betrifft die vorliegende Erfindung die Verwendung der erfindungsgemäßen haftenden Verstärkungseinlage zur Herstellung von verstärkten Gummiprodukten.

Weiterhin betrifft die vorliegende Erfindung die Verwendung der erfindungsgemäßen Tauchbadzusammensetzung zur Beschichtung von Verstärkungseinlagen für Gummiprodukte.

Bei den verstärkten Gummiprodukten handelt es sich bevorzugt um Reifen, sowohl für PKW und Motorräder als auch für Nutzfahrzeuge und Flugzeuge und um technische Gummierzeugnisse, insbesondere um Förderbänder, Luftfedern, Schläuche und Treibriemen, z.B. Keilriemen, Keilrippriemen, Rundriemen, Flachriemen oder Zahnriemen.

Anhand der nachfolgenden Beispiele soll der erfindungsgemäße Gegenstand näher erläutert werden, ohne diesen auf die hier gezeigten spezifischen Ausführungsformen einschränken zu wollen.

### 1 Messmethoden

Im Rahmen dieser Anmeldung wurden die folgenden Messmethoden verwendet.

### Partikeldurchmesser (d₅₀₋bzw. d₁₀₀-Wert)

Der Partikeldurchmesser wurde an einem Pulver oder an einer wässriger Dispersion nach ISO 13320 bei 23 °C mittels Laserbeugung bestimmt. Die Lasermessungen wurden mit einem Granulometer Cilas 1064 der Quantachrome GmbH (Deutschland) durchgeführt.

### Peel-Haftung

Die Peel-Haftung wurde nach ASTM 4393 bestimmt. Dafür wurden achtlagige Prüfkörper mit symmetrischem Aufbau (2 Lagen Cord (= haftende Verstärkungseinlage) und 6 Lagen Gummi, vgl. Fig. 2, ASTM 4393) hergestellt. Die Zugprüfung erfolgte bei einer Messtemperatur von 23 °C mit einer Zuggeschwindigkeit von 20 mm/min. Die Zugprüfung wurde nach Option 1 der ASTM 4393 ausgewertet. Als Gummi wurde der GB-Rubber der Firma Wuxi Segen Rubber Tech. Co., Ltd, China (Dicke 0,4 mm) verwendet. Die Vulkanisation erfolgte bei drei unterschiedlichen Bedingungen, 160 °C, 100 bar für 12,5 Minuten, 170 °C, 100 bar für 15 Minuten und 170 °C, 100 bar für 30 Minuten.

### Oberflächenbedeckungsgrad

Der Oberflächenbedeckungsgrad nach der Peel-Haftungsprüfung wurde durch eine visuelle Prüfung bestimmt, indem das entsprechende Reifenmaterial mit internen Mustern verglichen wurde, die eine Bedeckung von 0 bis 100 % aufwiesen. Eine Bedeckung von 0 % bedeutet, dass sich die haftende Verstärkungseinlage nach der Peel-Haftungsprüfung vollkommen vom Gummi abgelöst hat, der Bruch erfolgte also in der Grenzschicht zwischen Reifencord und Gummi. Eine Bedeckung von 100 % bedeutet hingegen, dass keine Ablösung der haftenden Verstärkungseinlage vom Gummi erfolgte, d.h. der Bruch erfolgte im Gummi.

### Feststoffgehalt

Der Feststoffgehalt wird durch Abdampfen in einem Halogentrockner (Mettler Halogentrockner HR 73) bestimmt. Dazu werden in eine Aluminiumschale (Durchmesser: 95 mm) ca. 3 g der Tauchbadzusammensetzung gleichmässig auf dem Schalenboden verteilt. Die Prüfdauer beträgt 25 Minuten bei 80°C. Bei der Anzeigeart wird die Trockenart "Trockengehalt (100 - 0)" gewählt. Angegeben wird der Mittelwert aus drei Bestimmungen.

### Zahlenmittlere Molmasse (Mn)

Die Bestimmung der zahlenmittlere Molmasse (Mn) erfolgt mittels GPC (Gel-Permeations-Chromatographie) mit UV-Detektion.

Zur Messung werden die Proben in THF gelöst (ca. 5 mg in 10 ml) und vor dem Abfüllen in Vials durch Einweg-Spritzenfilter filtriert.

| | |
|---|---|
| Gerät: | Waters 2690 Alliance |
| Software: | Waters Millenium 32 GPC-Modul |
| Säule: | PLgel 100 Å, Partikelgrösse 3 µm |
| | Länge 30,0 cm |
| | Innendurchmesser 7,5 mm |
| Wellenlänge UV-Detektor: | 254 nm |
| Eluent: | THF |
| Flussrate: | 1,0 ml/min |

Die zahlenmittlere Molmasse (Mn) wird mit konventioneller Kalibrierung ermittelt. Die Kalibrierung erfolgt mit Polystyrol-Standards (Massen 700, 1100 und 2000) sowie Laurinlactam (Masse 197). Es werden drei Bestimmungen durchgeführt. Angegeben wird das arithmetische Mittel der Molmasse in g/mol. Das Lösungsmittel THF wurde in HPLC-Qualität bei EGT-Chemie, Schweiz bezogen. Die Einwegfilter sind erhältlich bei Macherey-Nagel GmbH & Co. KG, Deutschland, unter der Bezeichnung Chromafil A-45/25 (Porengrösse 0,45 µm, Filterdurchmesser 25 mm). Die Einwegspritzen sind erhältlich bei VWR International GmbH, Deutschland.

### 2 Ausgangsmaterialien

Die in den Beispielen und Vergleichsbeispielen verwendeten Materialien werden in Tabelle 1 zusammengefasst.

**Tabelle 1: In den Beispielen und Vergleichsbeispielen verwendete Materialien.**

| | |
|---|---|
| CL-verkappte MDI-Mischung (A1) | Wässrige Dispersion aus mit ε-Caprolactam verkappter MDI-Mischung und Tensid^{a)} |
| | Feststoffgehalt: 50 Gew.-% |
| | Zahlenmittlere Molmasse Mn der mit ε-Caprolactam verkappten MDI-Mischung: 740 g/mol |
| | volumenmittlerer Partikeldurchmesser: d₅₀= 1,2 µm, d₁₀₀ = 3,6 µm |
| | Hersteller: EMS-CHEMIE AG, Schweiz |
| CL-verkapptes niedermolekulares Diisocyanat (A2) | Wässrige Dispersion aus mit ε-Caprolactam verkapptem 4,4'-Diphenylmethan-diisocyanat und Tensid |
| | Feststoffgehalt: 60 Gew.-% |
| | Zahlenmittlere Molmasse des mit ε-Caprolactam verkapptem 4,4'-Diphenylmethan-diisocyanat: 477 g/mol |
| | volumenmittlerer Partikeldurchmesser: d₅₀ = 0,9 µm, d₁₀₀ = 3,0 µm |
| | Hersteller: EMS-CHEMIE AG, Schweiz |
| RFL (B) | Wässrige Dispersion aus Resorcin, Formaldehyd, Styrol-Butadien-Vinylpyridine-Latex |
| | Gewichtsverhältnis 1,0 : 0,6 : 9,2 |
| | Feststoffgehalt: 20 Gew.-% |
| | Hersteller: EMS-CHEMIE AG, Schweiz |
| Epoxid | Glycerintriglycidylether, flüssig |
| | Hersteller: EMS-CHEMIE AG, Schweiz |
| Entschäumer | Mineralöl-basierter Entschäumer, flüssig |
| | Handelsname: Surfynol DF-220 |
| | Hersteller: Air Products and Chemicals Inc., USA |

| | |
|---|---|
| a) Die Herstellung der verkappten MDI-Mischung (A1) erfolgte durch Verkappung des von der DowDuPont erhältlichen Produkts "Voronate M600" mit ε-caprolactam. | |

Als Substrat wurde ein Polyestercord (1670x1x2 dtex, ZS 380, 1x50) der Firma Longlaville Performance Fibers SAS verwendet.

Als Beschichtungsanlage wurde eine Pilotanlage der Mehler Engineering & Service GmbH, Fulda, Deutschland verwendet.

### 3 Beispiele und Vergleichsbeispiele

In der folgenden Tabelle 2 werden die Resultate des Beispiels und der Vergleichsbeispiele gemäß vorliegender Erfindung zusammengefasst.

**Tabelle 2: Beispiel und Vergleichsbeispiele.**

| **Komponenten** | **Einheit** | **Beispiel** | **Vergleichsbeispiele** | |
|---|---|---|---|---|
| | | **1** | **2** | **3** |
| CL-verkappte MDI-Mischung (A1), Feststoffgehalt 50 Gew-% | Gew.-Teile | 5 | - | - |
| CL-verkapptes Diisocyanat (A2), Feststoffgehalt 60 Gew.-% | Gew.-Teile | - | 4.2 | 4.2 |
| RFL (B), Feststoffgehalt 20 Gew.-% | Gew.-Teile | 100 | 100 | 100 |
| Epoxid, flüssig | Gew.-Teile | - | - | 1.05 |
| Entschäumer, flüssig | Gew.-Teile | - | - | 0.2 |
| Wasser, deionisiert | Gew.-Teile | 95 | 95.8 | 94.55 |
| Feststoffgehalt der Tauchbadzusammensetzung | Gew.-% | 11.3 | 11.3 | 11.9 |

| **Messungen** | | | | |
|---|---|---|---|---|
| Peel-Haftung | N/inch | | | |
| 160 °C, 12,5 min, 100 bar | | 301 | 90 | 232 |
| 170 °C, 15 min, 100 bar | | 242 | 75 | 191 |
| 170°C, 30 min, 100 bar | | 199 | 60 | 143 |
| Oberflächenbedeckungsgrad | % | | | |
| 160 °C, 12,5 min, 100 bar | | 20 | 0 | 7 |
| 170 °C, 15 min, 100 bar | | 50 | 0 | 12 |
| 170°C, 30 min, 100 bar | | 38 | 0 | 7 |

### 4 Diskussion der Ergebnisse

Der Reifencord gemäß des in Tabelle 2 dargestellten erfindungsgemäßen Beispiels 1 zeigt durchgängig eine höhere Peel-Haftung und einen höheren Oberflächenbedeckungsgrad als die Reifencords gemäß den in Tabelle 2 abgebildeten Vergleichsbeispielen 2 und 3. Bemerkenswert ist dabei, dass durch Verwendung des erfindungsgemäßen Tauchbads sogar noch bessere Hafteigenschaften und Oberflächenbedeckungsgrade erreicht wurden, als dies durch den Zusatz von Epoxiden möglich war.

## Patentansprüche

1. Wässrige, feststoffhaltige Tauchbadzusammensetzung zur Behandlung von Verstärkungseinlagen für Gummiprodukte enthaltend die folgenden Komponenten oder bestehend aus diesen Komponenten,
(A) mindestens eine verkappte MDI-Mischung,
wobei die MDI-Mischung MDI-Oligomere der Formel (l), wobei n eine ganze Zahl von 1 bis 8 ist, 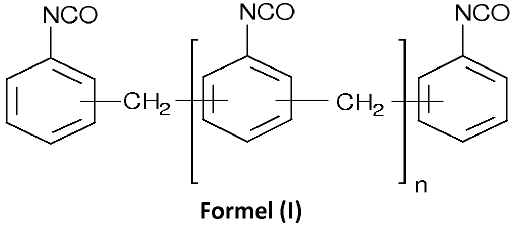 und MDI-Monomere enthält;
(B) mindestens einen Resorcin-Formaldehyd-Latex; und
(C) gegebenenfalls mindestens ein Additiv,
wobei die Tauchbadzusammensetzung im Wesentlichen frei von Epoxiden ist.

2. Wässrige, feststoffhaltige Tauchbadzusammensetzung gemäß Anspruch 1, **dadurch gekennzeichnet, dass**
der Feststoffanteil 2 bis 40 Gew.-%, bevorzugt 3 bis 30 Gew.-% und besonders bevorzugt 5 bis 27 Gew.-% bezogen auf das Gesamtgewicht der Tauchbadzusammensetzung beträgt.

3. Wässrige, feststoffhaltige Tauchbadzusammensetzung gemäß Anspruch 1 oder 2, **dadurch gekennzeichnet, dass**
diese die folgende Zusammensetzung aufweist, wobei die Gew.-Teile jeweils auf das Gesamtgewicht der Tauchbadzusammensetzung bezogen sind:
(A) 0,1 bis 20 Gew.-teile, bevorzugt 0,2 bis 10 Gew.-teile und besonders bevorzugt 1 bis 8 Gew.-teile,
(B) 5 bis 200 Gew.-teile, bevorzugt 15 bis 175 Gew.-teile und besonders bevorzugt 25 bis 150 Gew.-teile, und
(C) 0 bis 20 Gew.-teile, bevorzugt 0,1 bis 10 Gew.-teile und besonders bevorzugt 0,1 bis 3 Gew.-teile.

4. Wässrige, feststoffhaltige Tauchbadzusammensetzung gemäß einem der vorhergehenden Ansprüche, **dadurch gekennzeichnet, dass**
die verkappte MDI-Mischung (A) MDI-Derivate enthält, die bevorzugt ausgewählt sind aus der Gruppe bestehend aus MDI-Uretdion, Addukten von MDI und/oder MDI-Oligomeren mit anderen Verbindungen, vorzugsweise mit Polyethylenglykol und Mischungen hiervon; und/oder
das MDI ausgewählt ist aus der Gruppe bestehend aus 4,4'-MDI, 2,4'-MDI, 2,2'-MDI und Mischungen hiervon, wobei der Anteil von 2,4'-MDI und 2,2'-MDI kleiner als 10 Gew.-%, bevorzugt kleiner als 8 Gew.-% ist und besonders bevorzugt der Anteil von 2,4'-MDI und 2,2'-MDI von 0,1 bis 6 Gew.-% beträgt, bezogen auf die MDI-Mischung, besonders bevorzugt enthält die Mischung ein oder mehrere MDI-Oligomere, wobei n in Formel (I) eine ganze Zahl von 1 bis 8 und vorzugsweise von 1 bis 6 ist.

5. Wässrige, feststoffhaltige Tauchbadzusammensetzung gemäß einem der vorhergehenden Ansprüche, **dadurch gekennzeichnet, dass**
die MDI-Mischung folgende Zusammensetzung aufweist:
(i) 25 bis 60 Gew.-%, vorzugsweise 25 bis 49,9 Gew.-% MDI-Monomere;
(ii) 40 bis 75 Gew.-%, vorzugsweise 50 bis 74,9 Gew.-% MDI-Oligomere; und
(iii) 0 bis 9 Gew.-%, vorzugsweise 0,1 bis 6 Gew.-% MDI-Derivate; wobei sich die Anteile der Komponenten (i) bis (iii) zu 100 Gew.-% addieren.

6. Wässrige, feststoffhaltige Tauchbadzusammensetzung gemäß einem der vorherigen Ansprüche, **dadurch gekennzeichnet, dass**
bei dem mindestens einen Resorcin-Formaldehyd-Latex (B) der Latex ausgewählt ist aus der Gruppe bestehend aus Styrol-Butadien-Vinylpyridin Copolymer, Styrol-Butadien-Vinylpyridin Copolymer modifiziert mit Carbonsäure, Styrol-Butadien-Copolymer, Styrol-Butadien Copolymer modifiziert mit Carbonsäure, Nitril-Butadien-Copolymer, Naturlatex, Chloroprenlatex und Mischungen hiervon.

7. Wässrige, feststoffhaltige Tauchbadzusammensetzung gemäß einem der vorherigen Ansprüche, **dadurch gekennzeichnet, dass**
das mindestens eine Additiv (C) ausgewählt ist aus der Gruppe bestehend aus Tensiden, Entschäumern, Füllstoffen, Farbstoffen, Konservierungsmitteln, Verdickungsmitteln, Säuren Laugen, mehrwertigen Alkoholen und Mischungen hiervon.

8. Wässrige, feststoffhaltige Tauchbadzusammensetzung gemäß einem der vorhergehenden Ansprüche, **dadurch gekennzeichnet, dass**
die MDI-Mischung (A) mit einer Verbindung verkappt ist, die ausgewählt ist aus der Gruppe bestehend aus Monophenolen, insbesondere Phenol, Kresol, Trimethylphenolen und tert.-Butylphenolen, Lactamen, insbesondere ε-Caprolactam, δ-Valerolactam und Laurinlactam, Oximen, insbesondere Methyl-Ethyl-Ketoxim, Methyl-Amyl-Ketoxim und Cyclohexanonoxim, Enol-bildenden Verbindungen, insbesondere Acetoessigester, Acetylaceton sowie Mischungen hiervon,
und die bevorzugt ausgewählt ist aus der Gruppe bestehend aus Monophenolen, insbesondere Phenol, Kresol, Trimethylphenolen und tert.-Butylphenolen, Lactamen, insbesondere ε-Caprolactam, δ-Valerolactam und Laurinlactam und Mischungen hiervon,
und die besonders bevorzugt ausgewählt ist aus der Gruppe bestehend aus Phenol, ε-Caprolactam und Mischungen hiervon und
die am bevorzugtesten ε-Caprolactam ist.

9. Wässrige, feststoffhaltige Tauchbadzusammensetzung gemäß einem der vorhergehenden Ansprüche, **dadurch gekennzeichnet, dass**
der mittlere Partikeldurchmesser *d*₅₀ der verkappten MDI-Mischung maximal 2 µm; bevorzugt 0,6 bis 1,5 µm beträgt, und/oder
der Partikeldurchmesser *d*₁₀₀ der verkappten MDI-Mischung maximal 6 µm; bevorzugt 0,6 bis 5 µm beträgt, und/oder
die verkappte MDI-Mischung ein zahlenmittleres Molekulargewicht Mₙ im Bereich von 550 bis 1200 g/mol und bevorzugt von 700 bis 1100 g/mol aufweist.

10. Verfahren zur Herstellung einer haftenden Verstärkungseinlage, welches mindestens die folgenden Schritte umfasst:
a) Bereitstellen zumindest einer Verstärkungseinlage;
b) Eintauchen der bereitgestellten Verstärkungseinlage in mindestens eine Tauchbadzusammensetzung gemäß einem der Ansprüche 1 bis 9;
c) Trocknen der Verstärkungseinlage aus Schritt b) bei 100 bis 240 °C;
d) Einbrennen der Beschichtung der Verstärkungseinlage aus Schritt c) bei 200 bis 250 °C.

11. Verfahren gemäß Anspruch 10, **dadurch gekennzeichnet, dass**
die Verstärkungseinlage ausgewählt ist aus einer Verbindung aus der Gruppe bestehend aus Polyamid 6, Polyamid 66, Polyethylenterephthalat, Polyethylennaphthalat, Rayon, Aramid, Baumwolle, Basaltfasern, Sisal, Hanf, Flachs, Kokosfasern und Mischungen hiervon.

12. Verfahren gemäß Anspruch 10 oder 11, **dadurch gekennzeichnet, dass**
die Verstärkungseinlage vor Schritt b) in eine wässrige, feststoffhaltige Tauchbadzusammensetzung eingetaucht wird, die mindestens eine verkappte MDI-Mischung enthält und die bevorzugt keine anderen Komponenten enthält,
wobei die MDI-Mischung MDI-Oligomere der Formel (l), wobei n eine ganze Zahl von 1 bis 8 ist, 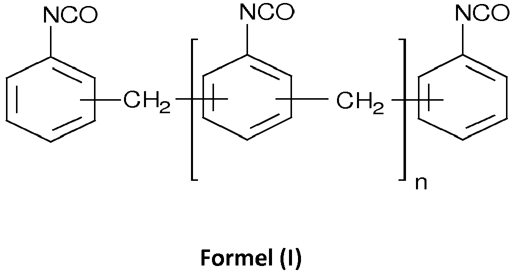 und MDI-Monomere enthält.

13. Verfahren zur Herstellung eines verstärkten Gummiproduktes, welches die folgenden Schritte umfasst:
(i) Bereitstellen von mindestens einer Lage einer haftenden Verstärkungseinlage hergestellt über das Verfahren gemäß einem der Ansprüche 10 bis 12;
(ii) Einbetten von mindestens einer Lage aus einer haftenden Verstärkungseinlage aus Schritt (i) in eine Gummimatrix in einer Pressform;
(iii) Pressen der Lagen aus Schritt (ii);
(iv) Vulkanisieren des verstärkten Gummiprodukts aus Schritt (iii) bei 140 bis 210 °C und 5 bis 110 bar für 5 bis 45 Minuten;
(v) Entnehmen des verstärkten Gummiprodukts aus Schritt (iv) aus der Pressform.

14. Haftende Verstärkungseinlage herstellbar nach einem Verfahren gemäß einem der Ansprüche 10 bis 12.

15. Verwendung der haftenden Verstärkungseinlage gemäß Anspruch 14 zur Herstellung von verstärkten Gummiprodukten.

16. Verwendung der wässrigen, feststoffhaltigen, Tauchbadzusammensetzung gemäß einem der Ansprüche 1 bis 9 zur Beschichtung von Verstärkungseinlagen für Gummiprodukte.

## Claims

1. Aqueous, solids-containing dipping bath composition for treating reinforcing inserts for rubber products comprising the following components or consisting of these components,
(A) at least one blocked MDI mixture,
the MDI mixture comprising MDI oligomers of formula (I), n being a whole number from 1 to 8, 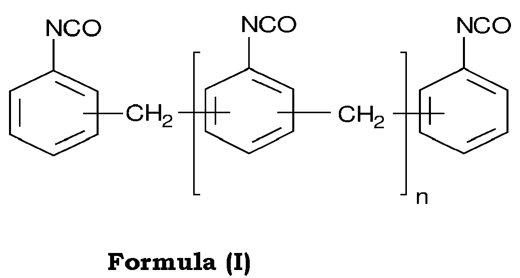 and MDI monomers;
(B) at least one resorcinol-formaldehyde latex; and
(C) possibly at least one additive,
wherein the dipping bath composition is essentially free of epoxides.

2. Aqueous, solids-containing dipping bath composition according to claim 1, **characterised in that**
the solids proportion is 2 to 40% by weight, preferably 3 to 30% by weight and particularly preferably 5 to 27% by weight, relative to the total weight of the dipping bath composition.

3. Aqueous, solids-containing dipping bath composition according to claim 1 or 2, **characterised in that**
the bath has the following composition, the parts by weight respectively relating to the total weight of the dipping bath composition:
(A) 0.1 to 20 parts by weight, preferably 0.2 to 10 parts by weight and particularly preferably 1 to 8 parts by weight,
(B) 5 to 200 parts by weight, preferably 15 to 175 parts by weight and particularly preferably 25 to 150 parts by weight, and
(C) 0 to 20 parts by weight, preferably 0.1 to 10 parts by weight and particularly preferably 0.1 to 3 parts by weight.

4. Aqueous, solids-containing dipping bath composition according to one of the preceding claims, **characterised in that**
the blocked MDI mixture (A) comprises MDI derivatives which are selected preferably from the group consisting of MDI uretdione, adducts of MDI and/or MDI oligomers with other compounds, preferably with polyethylene glycol and mixtures hereof; and/or
the MDI is selected from the group consisting of 4,4'-MDI, 2,4'-MDI, 2,2'-MDI and mixtures hereof, the proportion of 2,4'-MDI and 2,2'-MDI being less than 10% by weight, preferably less than 8% by weight and particularly preferably the proportion of 2,4'-MDI and 2,2'-MDI being from 0.1 to 6% by weight, relative to the MDI mixture, particularly preferably the mixture comprising one or more MDI oligomers, n in formula (I) being a whole number from 1 to 8 and preferably from 1 to 6.

5. Aqueous, solids-containing dipping bath composition according to one of the preceding claims, **characterised in that**
the MDI mixture has the following composition:
(i) 25 to 60% by weight, preferably 25 to 49.9% by weight, of MDI monomers;
(ii) 40 to 75% by weight, preferably 50 to 74.9% by weight, of MDI oligomers; and
(iii) 0 to 9% by weight, preferably 0.1 to 6% by weight, of MDI derivatives;
the proportions of components (i) to (iii) adding up to 100% by weight.

6. Aqueous, solids-containing dipping bath composition according to one of the preceding claims, **characterised in that**
in the case of the at least one resorcinol-formaldehyde latex (B), the latex is selected from the group consisting of styrene-butadiene-vinylpyridine copolymer, styrene-butadiene-vinylpyridine copolymer modified with carboxylic acid, styrene-butadiene copolymer, styrene-butadiene copolymer modified with carboxylic acid, nitrile-butadiene copolymer, natural latex, chloroprene latex and mixtures hereof.

7. Aqueous, solids-containing dipping bath composition according to one of the preceding claims, **characterised in that**
the at least one additive (C) is selected from the group consisting of surfactants, defoamers, fillers, colourants, preservatives, thickening agents, acids, lyes, multivalent alcohols and mixtures hereof.

8. Aqueous, solids-containing dipping bath composition according to one of the preceding claims, **characterised in that**
the MDI mixture (A) is blocked with a compound which is selected from the group consisting of monophenols, in particular phenol, cresol, trimethylphenols and tert.-butylphenols, lactams, in particular ε-caprolactam, δ-valerolactam and laurinlactam, oximes, in particular methylethylketoxime, methylamylketoxime and cyclohexanone oxime, enol-forming compounds, in particular acetic acid ester, acetyl acetone and also mixtures hereof,
and which is preferably selected from the group consisting of monophenols, in particular phenol, cresol, trimethylphenols and tert.-butylphenols, lactams, in particular ε-caprolactam, δ-valerolactam and laurinlactam and mixtures hereof,
and which is particularly preferably selected from the group consisting of phenol, ε-caprolactam and mixtures hereof, and
which is most preferably ε-caprolactam.

9. Aqueous, solids-containing dipping bath composition according to one of the preceding claims, **characterised in that** the average particle diameter *d*₅₀ of the blocked MDI mixture is at most 2 µm; preferably 0.6 to 1.5 µm, and/or
the particle diameter *d*₁₀₀ of the blocked MDI mixture is at most 6 µm; preferably 0.6 to 5 µm, and/or
the blocked MDI mixture has a number-average molar mass Mₙ in the range of 550 to 1,200 g/mol and preferably of 700 to 1,100 g/mol.

10. Method for producing an adhesive reinforcing insert which comprises at least the following steps:
a) providing at least one reinforcing insert;
b) dipping the prepared reinforcing insert in at least one dipping bath composition according to one of the claims 1 to 9;
c) drying the reinforcing insert from step b) at 100 to 240°C;
d) annealing the coating of the reinforcing insert from step c) at 200 to 250°C.

11. Method according to claim 10, **characterised in that**
the reinforcing insert is selected from a compound from the group consisting of polyamide 6, polyamide 66, polyethylene terephthalate, polyethylene naphthalate, rayon, aramide, cotton, basalt fibres, sisal, hemp, flax, coconut fibres and mixtures hereof.

12. Method according to claim 10 or 11, **characterised in that** the reinforcing insert is dipped, before step b), in an aqueous, solids-containing dipping bath composition which comprises at least one blocked MDI mixture and which comprises preferably no other components,
the MDI mixture comprising MDI oligomers of formula (I), n being a whole number from 1 to 8, 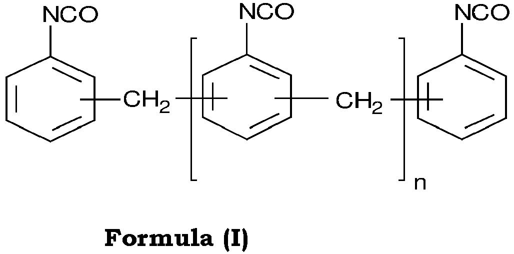 and MDI monomers.

13. Method for producing a reinforced rubber product, which comprises the following steps:
(i) providing at least one layer of an adhesive reinforcing insert produced via the method according to one of the claims 10 to 12;
(ii) embedding at least one layer of an adhesive reinforcing insert from step (i) in a rubber matrix in a pressing mould;
(iii) pressing the layers from step (ii);
(iv) vulcanising the reinforced rubber product from step (iii) at 140 to 210°C and 5 to 110 bar for 5 to 45 minutes;
(v) removing the reinforced rubber product from step (iv) from the pressing mould.

14. Adhesive reinforcing insert producible according to a method according to one of the claims 10 to 12.

15. Use of the adhesive reinforcing insert according to claim 14 for the production of reinforced rubber products.

16. Use of the aqueous, solids-containing dipping bath composition according to one of the claims 1 to 9 for coating reinforcing inserts for rubber products.

## Revendications

1. Composition aqueuse de bain d'immersion contenant des solides, pour le traitement d'inserts de renforcement pour des produits de caoutchouc, contenant les composants suivants, ou étant constituée de ces composants,
(A) au moins un mélange de MDI coiffés,
le mélange de MDI contenant des oligomères de MDI de formule (l), n étant un nombre entier de 1 à 8, 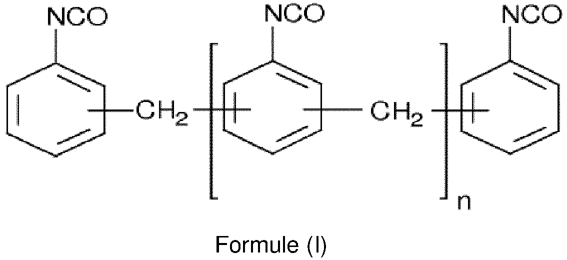 et des monomères de MDI ;
(B) au moins un latex de résorcinol-formaldéhyde ; et
(C) éventuellement au moins un additif,
la composition de bain d'immersion étant pour l'essentiel exempte d'époxydes.

2. Composition aqueuse de bain d'immersion contenant des solides selon la revendication 1, **caractérisée en ce que**
la proportion des solides est de 2 à 40 % en poids, de préférence de 3 à 30 % en poids et d'une manière particulièrement préférée de 5 à 27 % en poids par rapport au poids total de la composition de bain d'immersion.

3. Composition aqueuse de bain d'immersion contenant des solides selon la revendication 1 ou 2, **caractérisée en ce qu'**elle présente la composition suivante, les parties en poids se rapportant dans chaque cas au poids total de la composition de bain d'immersion :
(A) 0,1 à 20 parties en poids, de préférence 0,2 à 10 parties en poids, et d'une manière particulièrement préférée 1 à 8 parties en poids,
(B) 5 à 200 parties en poids, de préférence 15 à 175 parties en poids et d'une manière particulièrement préférée 25 à 150 parties en poids, et
(C) 0 à 20 parties en poids, de préférence 0,1 à 10 parties en poids et d'une manière particulièrement préférée 0,1 à 3 parties en poids.

4. Composition aqueuse de bain d'immersion contenant des solides selon l'une des revendications précédentes, **caractérisée en ce que**
le mélange de MDI coiffés (A) contient des dérivés de MDI qui de préférence sont choisis dans le groupe consistant en la MDI-uretdione, les produits d'addition de MDI et/ou d'oligomères de MDI avec d'autres composés, de préférence avec du polyéthylèneglycol et les mélanges de ceux-ci ; et/ou
le MDI est choisi dans le groupe consistant en le 4,4'-MDI, le 2,4'-MDI, le 2,2'-MDI et les mélanges de ceux-ci, la proportion de 2,4'-MDI et de 2,2'-MDI étant inférieure à 10 % en poids, de préférence inférieure à 8 % en poids, et d'une manière particulièrement préférée la proportion du 2,4'-MDI et du 2,2'-MDI est de 0,1 à 6 % en poids, par rapport au mélange de MDI, et d'une manière particulièrement préférée le mélange contient un ou plusieurs oligomères de MDI, n dans la formule (l) représentant un nombre entier de 1 à 8 et de préférence de 1 à 6.

5. Composition aqueuse de bain d'immersion contenant des solides selon l'une des revendications précédentes, **caractérisée en ce que**
le mélange de MDI présente la composition suivante :
(i) 25 à 60 % en poids, de préférence 25 à 49,9 % en poids de monomères de MDI ;
(ii) 40 à 75 % en poids, de préférence 50 à 74,9 % en poids d'oligomères de MDI ; et
(iii) 0 à 9 % en poids, de préférence 0,1 à 6 % en poids de dérivés de MDI ;
la somme des proportions des composants (i) à (iii) étant de 100 % en poids.

6. Composition aqueuse de bain d'immersion contenant des solides selon l'une des revendications précédentes, **caractérisée en ce que**
dans l'au moins un latex de résorcinol-formaldéhyde (B), le latex est choisi dans le groupe consistant en un copolymère styrène-butadiène-vinylpyridine, un copolymère styrène-butadiène-vinylpyridine modifié par un acide carboxylique, un copolymère styrène-butadiène, un copolymère styrène-butadiène modifié par un acide carboxylique, un copolymère nitrile-butadiène, un latex naturel, un latex de chloroprène et les mélanges de ceux-ci.

7. Composition aqueuse de bain d'immersion contenant des solides selon l'une des revendications précédentes, **caractérisée en ce que**
l'au moins un additif (C) est choisi dans le groupe consistant en les tensioactifs, les antimoussants, les charges, les colorants, les conservateurs, les épaississants, les acides et solutions alcalines, les polyalcools et les mélanges de ceux-ci.

8. Composition aqueuse de bain d'immersion contenant des solides selon l'une des revendications précédentes, **caractérisée en ce que**
le mélange de MDI (A) est coiffé par un composé qui est choisi dans le groupe consistant en les monophénols, en particulier le phénol, le crésol, les triméthylphénols et les tert-butylphénols, les lactames, en particulier l'ε-caprolactame, le δ-valérolactame et le laurinelactame, les oximes, en particulier la méthyl-éthyl-cétoxime, la méthyl-amyl-cétoxime et la cyclohexanone-oxime, les composés formant des énols, en particulier les esters de l'acide acétoacétique, l'acétylacétone ainsi que les mélanges de ceux-ci,
et qui de préférence sont choisis dans le groupe consistant en les monophénols, en particulier le phénol, le crésol, les triméthylphénols et les tert-butylphénols, les lactames, en particulier l'ε-caprolactame, le δ-valérolactame et le laurinelactame et les mélanges de ceux-ci,
et qui d'une manière particulièrement préférée sont choisis dans le groupe consistant en le phénol, l'ε-caprolactame et les mélanges de ceux-ci, et
qui le plus préférablement est l'ε-caprolactame.

9. Composition aqueuse de bain d'immersion contenant des solides selon l'une des revendications précédentes, **caractérisée en ce que**
la granulométrie moyenne *d₅₀* du mélange de MDI coiffés est au maximum de 2 µm ; de préférence de 0,6 à 1,5 µm, et/ou
la granulométrie *d₁₀₀* du mélange de MDI coiffés est au maximum de 6 µm ; de préférence de 0,6 à 5 µm, et/ou
le mélange de MDI coiffés présente une masse moléculaire moyenne en nombre Mₙ comprise dans la plage de 550 à 1200 g/mol et de préférence de 700 à 1100 g/mol.

10. Procédé de fabrication d'un insert de renforcement adhérent, qui comprend au moins les étapes suivantes :
a) fourniture d'au moins un insert de renforcement ;
b) immersion de l'insert de renforcement ainsi fourni dans au moins une composition de bain d'immersion selon l'une des revendications 1 à 9 ;
c) séchage de l'insert de renforcement de l'étape b) à 100 à 240 °C ;
d) durcissement au four du revêtement de l'insert de renforcement de l'étape c) à 200 à 250 °C.

11. Procédé selon la revendication 10, **caractérisé en ce que**
l'insert de renforcement est choisi parmi un composé du groupe consistant en le polyamide 6, le polyamide 66, le poly(téréphtalate d'éthylène), le poly(naphtalate d'éthylène), la rayonne, l'aramide, le coton, les fibres de basalte, le sisal, le chanvre, le lin, les fibres de coco et les mélanges de ceux-ci.

12. Procédé selon la revendication 10 ou 11, **caractérisé en ce que**
l'insert de renforcement de l'étape b) est immergé dans une composition aqueuse de bain d'immersion contenant des solides, qui contient au moins un mélange de MDI coiffés et qui de préférence ne contient pas d'autres composants,
le mélange de MDI contenant des oligomères de MDI de formule (l), dans laquelle n représente un entier de 1 à 8, 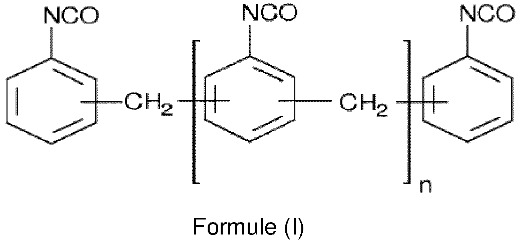 et des monomères de MDI.

13. Procédé de fabrication d'un produit de caoutchouc renforcé, qui comprend les étapes suivantes :
(i) fourniture d'au moins une couche d'un insert de renforcement adhérent fabriqué par le procédé selon l'une des revendications 10 à 12 ;
(ii) incorporation d'au moins une couche d'un insert de renforcement adhérent de l'étape (i) dans une matrice de caoutchouc dans un moule ;
(iii) pressage des couches de l'étape (ii) ;
(iv) vulcanisation du produit de caoutchouc renforcé de l'étape (iii) à 140 à 210 °C et sous 5 à 110 bar pendant 5 à 45 minutes ;
(v) extraction du moule du produit de caoutchouc renforcé de l'étape (iv).

14. Insert de renforcement adhérent pouvant être fabriqué par un procédé selon l'une des revendications 10 à 12.

15. Utilisation de l'insert de renforcement adhérent selon la revendication 14 pour la fabrication de produits de caoutchouc renforcés.

16. Utilisation de la composition aqueuse de bain d'immersion contenant des solides selon l'une des revendications 1 à 9 pour revêtir des inserts de renforcement pour produits de caoutchouc.
